# EUROPEAN PATENT APPLICATION

(11) **EP 3 561 747 A1**
(43) Date of publication of application: **30.10.2019**
(21) Application number: 18840591.4
(22) Date of filing: 17.04.2018
(51) Int. Cl.: G06Q 10/06, G06Q 50/10, H02J 3/14, H02J 7/00, H02J 7/02

(54) **POWER SUPPLY SWITCHING DEVICE AND POWER SUPPLY SYSTEM**

(30) Priority: 04.08.2017 JP 2017151792
(71) Applicant: Kabushiki Kaisha Funabashi Soukou, Funabashi-shi, Chiba 273-0014 (JP)
(72) Inventor: NINOMIYA Tadashi, Funabashi-shi Chiba 273-0014 (JP)
(74) Representative: Scott, Stephen John
(86) International application number: PCT/JP2018/015831
(87) International publication number: WO 2019/026355

(57) **Abstract**

A power supply switching device (20) according to the present disclosure is used in supplying power to chargers (30) installed in the parking lot of a housing complex. The power supply switching device (20) includes switches (21) and a controller (22). The switches (21) switch the power supply on and off to each group among groups into which the chargers (30) are divided. The controller (22) controls the switches (21). The controller (22) controls the switching on and off of the switches (21) so that only one switch (21) among the switches (21) is on, or all of the switches (21) are off.

## Description

### TECHNICAL FIELD

The present disclosure relates to a power supply switching device and a power supply system used in supplying power to automobiles parked in a parking lot of a housing complex.

### BACKGROUND

In recent years, local governments and the like have been promoting the use of electric vehicles (EV) for reasons such as reduction of carbon dioxide emissions.

The number of locations with charging stands, which are essential for the spread of electric vehicles, is increasing. It takes time to charge at a charging stand, however, even with rapid charging. Rapid charging at a charging stand also tends to quicken battery degradation. An environment that allows an electric vehicle to be charged in one's own parking lot would therefore be preferable for possession of an electric vehicle at home.

The disclosure in patent literature (PTL) 1, for example, allows a charging device for electric vehicles to be easily installed in a home parking space of a standard home.

### CITATION LIST

### Patent Literature

PTL 1: JP2010-277381A

### SUMMARY

### (Technical Problem)

The installation of a charging device for electric vehicles is a matter of personal discretion for a general household in a detached home. Hence, a charging device can be installed relatively easily in a home parking space.

Installation of charging devices for electric vehicles has not become common, however, in parking lots of housing complexes. Even if charging devices are installed, installation is often limited to several charging devices in dedicated parking spaces, and charging devices are rarely installed in the general parking spaces for residents. Consequently, electric vehicles are not becoming very common among the residents of housing complexes.

One reason why charging devices for electric vehicles are not commonly installed in parking lots of housing complexes is the difficulty of reaching a consensus regarding the installation of such charging devices due to the high cost associated with their introduction.

In light of these points, it is an objective of the present disclosure to provide a power supply switching device and a power supply system that can reduce the cost associated with the introduction of charging devices for electric vehicles in the parking lot of a housing complex.

### (Solution to Problem)

A power supply switching device according to the present disclosure is used in supplying power to a plurality of chargers installed in a parking lot of a housing complex. The power supply switching device includes a plurality of switches, configured to switch power supply on and off to each group among a plurality of groups into which the plurality of chargers is divided, and a controller configured to control the plurality of switches. The controller is configured to control switching on and off of the plurality of switches so that only one switch among the plurality of switches is on, or all of the plurality of switches are off, and to shift a time slot, during which each switch is on, by a predetermined time each day.

A power supply system according to the present disclosure is used in supplying power to automobiles parked in a parking lot of a housing complex. The power supply system includes a plurality of chargers installed in the parking lot and a power supply switching device configured to control a power supply to the plurality of chargers. The power supply switching device includes a plurality of switches, configured to switch power supply on and off to each group among a plurality of groups into which the plurality of chargers is divided, and a controller configured to control the plurality of switches. The controller is configured to control switching on and off of the plurality of switches so that only one switch among the plurality of switches is on, or all of the plurality of switches are off, and to shift a time slot, during which each switch is on, by a predetermined time each day.

### (Advantageous Effect)

A power supply switching device and a power supply system according to the present disclosure can reduce the cost associated with the introduction of charging devices for electric vehicles in the parking lot of a housing complex.

### BRIEF DESCRIPTION OF THE DRAWINGS

In the accompanying drawings:
FIG. 1 illustrates the schematic configuration of a power supply system according to an embodiment of the present disclosure;
FIG. 2 illustrates the schematic configuration of a power supply switching device in FIG. 1;
FIG. 3 is an example of a time setting table for power supply to each group; and
FIG. 4 is another example of a time setting table for power supply to each group.

### DETAILED DESCRIPTION

Embodiments of the present disclosure are described below, with reference to the drawings.

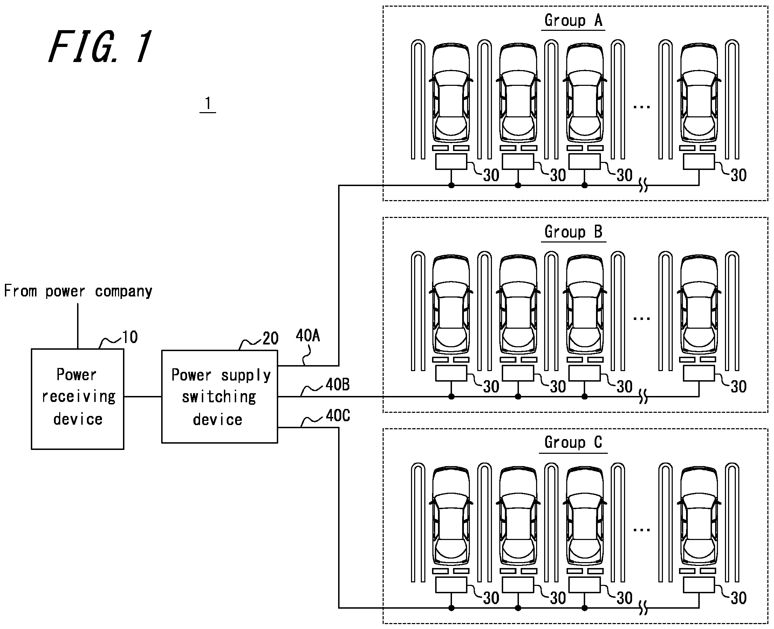

FIG. 1 illustrates the schematic configuration of a power supply system 1 according to an embodiment of the present disclosure. The power supply system 1 is a system used in supplying power to automobiles parked in a parking lot of a housing complex.

The power supply system 1 includes a power receiving device 10, a power supply switching device 20, and a plurality of chargers 30.

The power receiving device 10 is, for example, cubicle-type high-voltage power receiving equipment. The power receiving device 10 receives power at a high voltage from a power transmission line of a power company or the like, transforms the power to a low voltage such as 200 V, and supplies the power to the power supply switching device 20. The specifications required for a transformer or the like in the power receiving device 10 change in accordance with the necessary electrical capacity. As the necessary electrical capacity is smaller, a lower-cost device can be used for the power receiving device 10. The maximum power received from the power company is therefore preferably kept to a low power. The power receiving device 10 may transform power to 100 V instead of 200 V, but 200 V is preferable, since an electric vehicle can be charged more quickly at 200 V.

The power supply switching device 20 supplies the power supplied from the power receiving device 10 to one of a wire 40A, a wire 40B, and a wire 40C. When the power supply switching device 20 supplies power to the wire 40A, power is supplied to a plurality of chargers 30 connected to the wire 40A. When the power supply switching device 20 supplies power to the wire 40B, power is supplied to a plurality of chargers 30 connected to the wire 40B. When the power supply switching device 20 supplies power to the wire 40C, power is supplied to a plurality of chargers 30 connected to the wire 40C. The configuration and function of the power supply switching device 20 are described in detail below.

The charger 30 is installed in each parking space in the parking lot of the housing complex. The charger 30 is installed in a location, such as behind the car stop, that does not obstruct parking and into which the electrical plug of an electric vehicle or the like can easily be inserted. The charger 30 includes a socket into which the electrical plug of an electric vehicle or the like can be inserted. When power is being supplied to the charger 30 from the power supply switching device 20, the charger 30 can charge the battery of an electric vehicle whose electrical plug is inserted into the charger 30.

The charger 30 is not limited to charging the battery of an electric vehicle and can also charge the battery of a plug-in hybrid electric vehicle (PHEV), for example.

The plurality of chargers 30 are divided into three groups, i.e. group A, group B, and group C, as illustrated in FIG. 1. The chargers 30 of group A are connected to the power supply switching device 20 via the wire 40A. The chargers 30 of group B are connected to the power supply switching device 20 via the wire 40B. The chargers 30 of group C are connected to the power supply switching device 20 via the wire 40C.

FIG. 1 illustrates an example of the chargers 30 being divided into three groups, but the chargers 30 may be divided into any other number of two or more groups. That is, the chargers 30 may be divided into two groups, or into four or more groups.

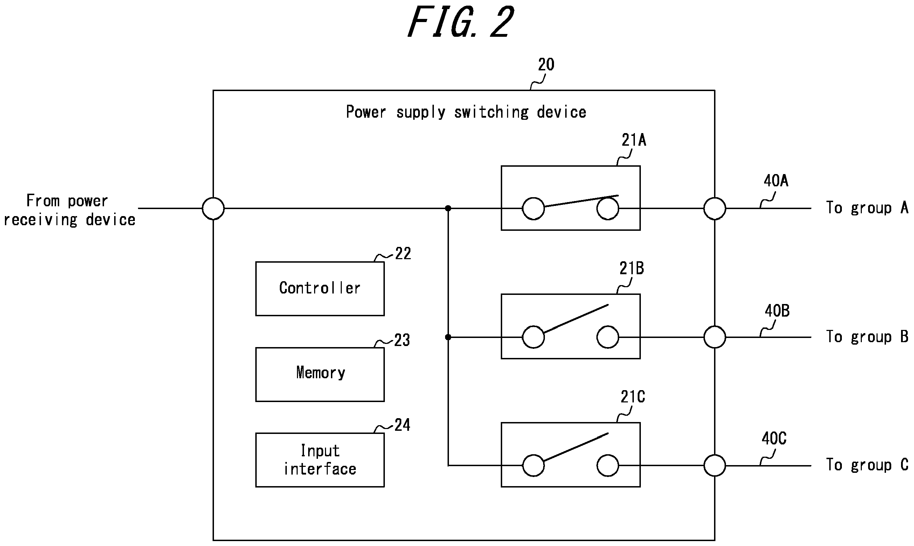

Next, the configuration and function of the power supply switching device 20 are described with reference to FIG. 2. As illustrated in FIG. 2, the power supply switching device 20 includes switches 21A to 21C, a controller 22, a memory 23, and an input interface 24.

On the basis of a control signal from the controller 22, the switch 21A switches the connection between the output of the power receiving device 10 and the wire 40A on and off. On the basis of a control signal from the controller 22, the switch 21B switches the connection between the output of the power receiving device 10 and the wire 40B on and off. On the basis of a control signal from the controller 22, the switch 21C switches the connection between the output of the power receiving device 10 and the wire 40C on and off.

When the switch 21A is turned on, power is supplied from the power receiving device 10 through the wire 40A to the chargers 30 connected to group A. When the switch 21B is turned on, power is supplied from the power receiving device 10 through the wire 40B to the chargers 30 connected to group B. When the switch 21C is turned on, power is supplied from the power receiving device 10 through the wire 40C to the chargers 30 connected to group C.

Subsequently, the switches 21A to 21C are simply referred to as switches 21 when no distinction needs to be made.

In the configuration in FIG. 2, the power supply switching device 20 includes three switches 21A to 21C, but the number of switches 21 included in the power supply switching device 20 is not limited to three. It suffices for the power supply switching device 20 to include a plurality of switches 21. The number of switches 21 may be two or may be four or more.

The switches 21 can, for example, be electromagnetic switches. When the switch 21 is an electromagnetic switch, the switch 21 turns on once current flows into a coil, included in the electromagnetic switch, due to a control signal from the controller 22. The switch 21 turns off once current stops flowing flows into the coil, included in the electromagnetic switch, due to a control signal from the controller 22.

The controller 22 controls the components of the power supply switching device 20 and the power supply switching device 20 overall. The controller 22 may include one or more processors. The processor may be configured as a general-purpose processor that executes particular functions by reading particular programs or as a dedicated processor specialized for particular processing. The control performed by the controller 22 is described in detail below.

The memory 23 stores various data, programs executed by the controller 22, and the like. The memory 23 may, for example, be a semiconductor memory, a magnetic memory, or the like. The memory 23 may be configured integrally with the controller 22.

The input interface 24 receives input from the user to the power supply switching device 20. The input interface 24 may be configured as physical buttons or as a touch panel for receiving input on a screen.

Next, operations of the controller 22 are described in detail.

The controller 22 turns the switches 21 on and off to switch the power supply to groups A to C on and off. The controller 22 controls the switches 21A to 21C either to set one of the switches 21A to 21C on or to set all of the switches 21 off. In other words, the controller 22 controls the switches 21A to 21C so that two or more of the switches 21A to 21C are not on simultaneously. FIG. 2 illustrates the state in which only the switch 21A is on.

Since two or more of the switches 21A to 21C are not on simultaneously, it suffices for the power supply switching device 20 to be capable of supplying power to only one group at most among the groups A to C. This allows the maximum power supply received from the power company to be reduced to approximately 1/3 in the power supply system 1 as compared to a configuration allowing power to be supplied simultaneously to all of the automobiles parked in the parking lot of the housing complex.

The controller 22 controls the switches 21A to 21C so that the amount of time per day that the switches 21 are on is identical for all of the switches 21. In this way, the controller 22 can ensure that power is supplied to each group for an equal length of time in a day. For example, the controller 22 divides a day into eight hour periods and controls the switches 21 to be on or off so that power is supplied to each group for eight hours at a time. The controller 22 can, for example, control the switches 21 to be on or off so that power is supplied to each group in the following time slots.
Group A: 0:00 to 8:00
Group B: 8:00 to 16:00
Group C: 16:00 to 24:00

In the above-described example, the chargers 30 in each group can charge an electric vehicle for eight hours out of the day. Many electric vehicles can be fully charged in eight hours or less when charged regularly at 200 V. Therefore, in the above-described example, most electric vehicles can be fully charged in a day if eight hours of power supply at a time are allocated to each group.

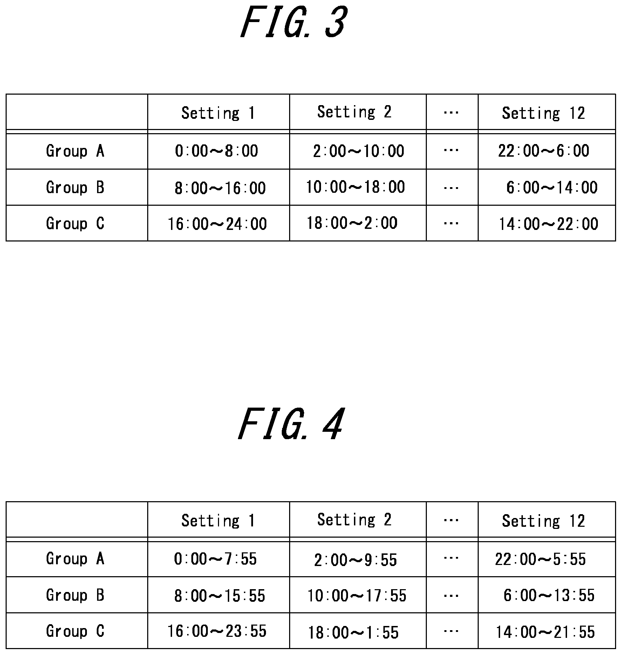

The controller 22 shifts the time slot during which each switch 21 is on by a predetermined time each day. For example, the controller 22 shifts the time slot during which each switch 21 is on by two hours each day. FIG. 3 illustrates an example of a time setting table for the controller 22 to supply power to each group.

Suppose that the controller 22 controls the switches 21A to 21C to supply power to groups A to C according to the time settings of setting 1 in FIG. 3 on a certain day, such as August 1^{st}. On the next day, August 2^{nd}, the controller 22 then controls the switches 21A to 21C to supply power to groups A to C according to the time settings of setting 2.

In the example in FIG. 3, the time during which power is supplied to each group is shifted by two hours between setting 1 and setting 2. If the time during which power is supplied to each group is shifted two hours per day in this way, the time setting completes one cycle in 12 days. After the time setting completes one cycle over 12 days, the controller 22 returns to setting 1 and controls the switches 21A to 21C to supply power to groups A to C according to the time settings of setting 1.

When the controller 22 shifts the time during which power is supplied to each group by two hours per day in this way, the time slots during which each group can receive the power supply can be made uniform over 12 days. Accordingly, the time slots during which power supply can be received can be allocated fairly between residents who park electric vehicles in the housing complex.

The two-hour shift per day by the controller 22 is only an example, and the length of the shift may be shorter or longer than two hours.

The memory 23 can store a time setting table such as the one illustrated in FIG. 3. The controller 22 switches the switches 21A to 21C on and off by referring to the time setting table stored in the memory 23.

The user of the power supply switching device 20, such as the administrator, can change the content of the time setting table stored in the memory 23 by providing input to the input interface 24. The user can also store a new time setting table in the memory 23 by providing input to the input interface 24.

In the example in FIG. 3, the controller 22 controls the switches 21A to 21C without setting any spare time for switching the switches 21, so that once the supply of power to group A stops, power is immediately supplied to group B. A spare time may, however, be set for switching the switches 21. FIG. 4 illustrates an example of a time setting table when a spare time for switching the switches 21 is set.

When the controller 22 controls the switches 21A to 21C at setting 1, for example, the controller 22 turns switch 21A off at 7:55 to stop the power supply to group A, as illustrated in FIG. 4. During the five-minute switching spare time, the controller 22 controls all of the switches 21 to be off. At 8:00, the controller 22 then controls the switch 21B to be on.

The five-minute switching spare time in FIG. 4 is only an example. The switching spare time may be shorter or longer than five minutes.

By thus setting the switching spare time during which all of the switches 21 are off, the controller 22 can reliably ensure that two or more switches 21 are not on simultaneously.

In this way, the controller 22 of the present embodiment controls the switching on and off of the plurality of switches 21 so that only one switch 21 among the plurality of switches 21 is on, or all of the switches 21 are off. Consequently, it suffices for the power supply switching device 20 to be capable of supplying power to only one group at most among the groups A to C. This allows the maximum power supply received from the power company to be reduced to a fraction in the power supply system 1 as compared to a configuration allowing power to be supplied simultaneously to all of the automobiles parked in the parking lot of the housing complex. The electrical capacity necessary for the power receiving device 10 can therefore be reduced to a fraction, and a low-cost device can be used for the power receiving device 10. Furthermore, since the maximum power supply received from the power company can be reduced to a fraction in the power supply system 1, the contracted amperage in the contract with the power company can be reduced, thereby keeping the base fee of the electric bill low. Accordingly, the power supply switching device 20 and the power supply system 1 according to the present embodiment can reduce the cost associated with the introduction of charging devices for electric vehicles in the parking lot of a housing complex.

Although the present disclosure is based on embodiments and drawings, it is to be noted that various changes and modifications will be apparent to those skilled in the art based on the present disclosure. Therefore, such changes and modifications are to be understood as included within the scope of the disclosure. For example, the functions and the like included in the various components and steps may be reordered in any logically consistent way. Furthermore, components or steps may be combined into one or divided. While the present disclosure has been described focusing on devices, the present disclosure may also be embodied as a method that includes steps performed by the components of a device. Furthermore, while the present disclosure has been described focusing on devices, the present disclosure may also be embodied as a method or program executed by a processor provided in a device, or as a recording medium on which a program is recorded. Such embodiments are also to be understood as included in the scope of the present disclosure.

### REFERENCE SIGNS LIST

- 1: Power supply system
- 10: Power receiving device
- 20: Power supply switching device
- 21, 21A, 21B, 21C: Switch
- 22: Controller
- 23: Memory
- 24: Input interface
- 30: Charger
- 40A, 40B, 40C: Wire

## Claims

1. A power supply switching device used in supplying power to a plurality of chargers installed in a parking lot of a housing complex, the power supply switching device comprising:
a plurality of switches configured to switch power supply on and off to each group among a plurality of groups into which the plurality of chargers is divided; and
a controller configured to control the plurality of switches;
wherein the controller is configured to
control switching on and off of the plurality of switches so that only one switch among the plurality of switches is on, or all of the plurality of switches are off; and
shift a time slot, during which each switch is on, by a predetermined time each day.

2. The power supply switching device of claim 1, wherein the controller is configured to control the plurality of switches so that an amount of time per day that each switch among the plurality of switches is on is identical for all of the plurality of switches.

3. The power supply switching device of claim 1 or 2, wherein the controller sets a switching spare time, during which all of the plurality of switches are off, from when the controller turns off the switch that is on until the controller turns on the switch to be turned on next.

4. A power supply system used in supplying power to automobiles parked in a parking lot of a housing complex, the power supply system comprising:
a plurality of chargers installed in the parking lot; and
a power supply switching device configured to control a power supply to the plurality of chargers;
wherein the power supply switching device comprises
a plurality of switches configured to switch power supply on and off to each group among a plurality of groups into which the plurality of chargers is divided; and
a controller configured to control the plurality of switches; and
wherein the controller is configured to
control switching on and off of the plurality of switches so that only one switch among the plurality of switches is on, or all of the plurality of switches are off; and
shift a time slot, during which each switch is on, by a predetermined time each day.

5. The power supply system of claim 4, further comprising a power receiving device configured to transform power received at a high voltage to a low voltage and to provide the power after transformation to the power supply switching device.
